# EUROPÄISCHE PATENTSCHRIFT

(11) **EP 2 830 977 B1**
(45) Veröffentlichungstag und Bekanntmachung des Hinweises auf die Patenterteilung: **31.01.2018**
(21) Anmeldenummer: 13714196.6
(22) Anmeldetag: 07.03.2013
(51) Int. Cl.: B65G 1/137

(54) **ZENTRALBANDSYSTEM EINER KOMMISSIONIERANLAGE**
CENTRAL BELT SYSTEM OF AN ORDER-PICKING SYSTEM
SYSTÈME DE COURROIE CENTRALE D'UNE INSTALLATION DE PRÉPARATION DE COMMANDES

(30) Priorität: 28.03.2012 DE 102012006150
(43) Veröffentlichungstag der Anmeldung: 04.02.2015
(73) Patentinhaber: Knapp AG, 8075 Hart bei Graz (AT)
(72) Erfinder: STELZER, Peter, A-8101 Gratkorn (AT); MATHI, Franz, A-8200 Gleisdorf (AT)
(74) Vertreter: Hanke, Hilmar
(86) Internationale Anmeldenummer: PCT/EP2013/000666
(87) Internationale Veröffentlichungsnummer: WO 2013/143648

(56) Entgegenhaltungen:
- WO-A1-98/47790
- WO-A1-03/033381
- US-A1- 2008 183 326
- US-A1- 2011 170 998
- US-A1- 2012 004 763

## Beschreibung

Die Erfindung betrifft ein Zentralbandsystem einer Kommissionieranlage.

Bei einem bekannten Zentralbandsystem bewegt sich ein zentral geführtes Förderband (Zentralband) in Richtung abziehende Behälterfördertechnik. Die Auftragsbehälter werden so vor dem Zentralband gestoppt und für eine bestimmte Dauer angehalten, dass alle Artikel des Zentralbandes, die für einen bestimmten Auftrag vorgesehen sind, in den Behälter fallen.

Über dem Zentralband werden Artikel in A-förmig angeordneten Artikelschächten vorrätig gehalten. Pro Artikelschacht ist ein Auswerfer angebracht. Die Auswerfer werden von einer zentralen Steuereinheit so zeitgerecht aktiviert, dass alle Artikel, die zu einem Auftrag gehören, auf einen immer größer werden Haufen auf dem sich vorbeibewegenden Zentralband angesammelt werden.

Am Ende des Zentralbandes ist fallweise eine Steigband angeschlossen. Dieses wird benötigt, um Artikel auf die eventuell höher laufende Behälterfördertechnik zu heben.

Das Zentralband bewegt sich im normalen Betriebsmodus mit einer Geschwindigkeit von ca. 1m/s.

In der Qualitätskontrolle von produzierenden Unternehmen ist die Bildverarbeitung bereits etabliert. So werden zum Beispiel Aufdrucke auf Behältnissen auf Vollständigkeit überprüft, mechanische Bauteile auf Produktionsfehler untersucht, etc.. Die zu überprüfenden Objekte können zur Überprüfung angehalten werden oder auch während der Bewegung überprüft werden. Es ist jedoch immer bekannt, wo im Raum sich die zu überprüfende Eigenschaft des Objektes befindet. Für die Bildverarbeitung leitet sich daraus ab, dass die Auflösung der verwendeten Kameras, der Arbeitsabstand als auch die Beleuchtung als konstante Parameter angesehen werden können.

Aus WO 98/47790 A1 ist ein Zentralbandsystem einer Kommissionieranlage bekannt, mit einem in Richtung einer abziehenden Behälterfördertechnik bewegbaren Zentralband, einer zentralen Steuereinheit, dergestalt, dass alle Artikel, die zu einem Kommissionier-Auftrag gehören, auf dem Zentralband gesammelt und unter Zwischenordnung einer Rutsche in einen zugeordneten Auftragsbehälter der Behälterfördertechnik abgegeben werden können. Im Bereich der Rutsche befindet sich ein Kamerasystem, das auf der Rutsche befindliche Artikel für eine Kontrolle von zu einem Kommissionierauftrag gehörenden Artikeln erfassen kann. Erste Kameras des Kamerasystems lesen die auf der Oberseite und der Seiten befindliche Information der auf der Rutsche liegenden Artikel und eine zweite Kamera des Kamerasystems liest die auf der Unterseite befindliche Information der auf der Rutsche liegenden Artikel. Gleiches gilt für die bekannten Systeme nach WO 2010 / 099874 A1, WO 2010/022832 A1, US 2008/183326 A1 und WO 03/033381 A1.

Ausgehend vom vorgenannten Stand der Technik ist es Aufgabe der Erfindung, ein Zentralbandsystem der eingangs genannte Art bereitzustellen, das bei einfachem Aufbau und einfachen Steuerungsmitteln eine nahezu hundertprozentige Kontrolle von chaotisch angeordneten Artikeln direkt am System, nämlich am laufenden Zentralband, ermöglicht. Gelöst wird die der Erfindung zugrundeliegende Aufgabe durch ein Zentralbandsystem der im Anspruch 1 angegebenen Art. Vorteilhafte Weiterbildungen ergeben sich aus den Ansprüchen 2 bis 9.

Es ist also ein Zentralbandsystem einer Kommissionieranlage vorgesehen, mit
- A-förmig angeordneten Artikelschächten, wobei ein Auswerfer pro Artikelschacht angebracht ist,
- einem in Richtung einer abziehenden Behälterfördertechnik bewegbaren Zentralband,
- einer zentralen Steuereinheit zum zeitgerechten Aktivieren der Auswerfer der Artikelschächte, so dass alle Artikel, die zu einem Kommissionier-Auftrag gehören, auf dem Zentralband in einem virtuellen Fenster gesammelt und gegebenenfalls unter Zwischenordnung eines Steigbandes in einen zugeordneten Auftragsbehälter der Behälterfördertechnik abgegeben werden können,
- einem variablen einstellbaren Kamerasystem im Bereich des Zentralbandendes mit ersten Kameras und zweiten Kameras,
- einem variablen einstellbaren Beleuchtungssystem im Bereich des Zentralbandendes,
- einem mit der zentralen Steuereinheit in Verbindung stehenden automatischen Kontrollsystem mit angeschlossener Bildverarbeitungseinheit für zu kontrollierende Artikel auf dem sich bewegenden Zentralband,
wobei die Bildverarbeitungseinheit von dem Kamerasystem nebst dem Beleuchtungssystem mit sicheren Daten von zu kontrollierenden Artikeln gespeist wird,
wobei die ersten Kameras des Kamerasystems und das Beleuchtungssystems so eingestellt und konfiguriert sind und die zu kontrollierenden auf dem Zentralband chaotisch angeordneten Artikel von den Auswerfern so ausgeworfen oder übergeben werden, dass optische Schattenbildung am zu kontrollierenden Artikel auf dem Zentralband gerade verhindert ist, und die ersten Kameras die auf dem Zentralband angeordneten Artikel im Bereich des Zentralbandendes erfassen können,
wobei unmittelbar nach dem Zentralband zweite Kameras des Kamerasystems so installiert und konfiguriert sind, dass die auf der Unterseite befindliche Information der Artikel gelesen wird, wenn die Artikel einer Flugbahn folgend oder auf einer schiefen Ebene rutschend in den Auftragsbehälter oder ein anderes abziehendes System fallen oder rutschen.

Häufig werden Artikel so auf dem Zentralband zu liegen kommen, dass die zu ermittelnde Information (Barcode, Unversehrtheit, etc.) auf der Unterseite des Artikels sind. Somit wird diese Information vom Zentralband verdeckt. Aus diesem Grund werden gemäß der Erfindung unmittelbar nach dem Zentralband zweite Kameras wie vorgenannt installiert und konfiguriert.

Insbesondere ist das Zeitintervall der vom automatischen Kontrollsystem berechneten Auswurfzeitpunkte der Artikel aus den Auswurfschächten so gewählt, dass die Artikel im Abstand vorzugsweise gerade so weit voneinander entfernt auf dem Zentralband zu liegen kommen, dass es zu keiner optischen Schattenbildung kommt.

Es werden hohe qualitative Anforderungen einer Kontrolle von Artikeln erfüllt. Eventuelle durch das Kommissioniersystem selbst verursachte Fehler werden direkt am System erkannt. Dadurch werden steigende Fehlerkosten vermieden. Ferner kann diverse Information von Artikeln zuverlässig erfasst werden, wie z. B. Seriennummern, Ablaufdaten und Chargeninformation, Beschaffenheit der Verpackung, Unversehrtheit der Verpackung und eventuell weitere Qualitätsmerkmale.

Es werden nicht Artikelhäufchen wie nach dem eingangs genannten Stand der Technik auf dem laufenden Zentralband gebildet, sondern es werden die Artikel vereinzelt zugeführt, und zwar in einer Weise, dass zum einen sämtliche Information eines jeden Artikels vom Kamerasystem einsehbar ist, gleichwohl aber die Artikel nicht übermäßig voneinander beabstandet sind, um nicht übermäßig viel Platz auf dem laufenden Zentralband zu beanspruchen.

Dies wird durch das erfindungsgemäße Kriterium erreicht, dass gerade Schattenbildung am zu kontrollierenden Artikel verhindert ist. Um Artikel optimal erkennen zu können, ist ein auf einen zu kontrollierenden Artikel geworfener Schatten eines Nachbarartikels nachteilig. Für eine gute Erfassung der Information auf dem zu kontrollierenden Artikel kommt es entscheidend auf die Helligkeit an.

Es ist also erfindungsgemäß der Abstand bzw. das Zeitintervall der vom Zentralbandkontrollsystem berechneten Auswurfzeitpunkte so gewählt, dass die Artikel so weit voneinander entfernt zu liegen kommen, dass es zu keiner optischen Schattenbildung kommt. Diese Abstände hängen von den physikalischen Abmessungen der Artikel ab. Stammdaten der im Lager befindlichen Artikel werden spezifisch um jene der optischen Schattenbildung erweitert. Das Zentralbandkontrollsystem berücksichtigt diese Daten in seiner Berechnung des idealen Auswurfzeitpunktes. Dadurch kann sinnbildlich erreicht werden, dass kleine Artikel näher nebeneinander auf das Zentralband ausgeworfen werden können als große Artikel, deren Schattenbildung größer ist.

Eine Kombination mit dem bisherigen Auswurf von Artikel auf einem Haufen und die spezifische Separation jener Artikel, die der Qualitätskontrolle unterzogen werden müssen, ist möglich. Die für diese Entscheidung notwendigen Informationen werden dem Zentralbandkontrollsystem vom übergeordneten Verwaltungssystem bzw. der zentralen Steuereinheit zur Verfügung gestellt.

Insbesondere ist vorgesehen, auch die Geschwindigkeit des Zentralbandes zusätzlich oder ausschließlich dynamisch zu verändern, um einen variablen Artikelabstand in Abhängigkeit von der Schattenbildung sicherzustellen.

Die Auswurfgenauigkeit hängt des Weiteren vom Gewicht der Artikel ab. Die Auswerfer des Zentralbandes werden zweckmäßigerweise in ihrer Beschleunigung so eingestellt, dass die Artikel der linken Artikelschächte des Zentralbandsystems links am Zentralband und die Artikel der rechten Artikelschächte des Zentralbandsystems rechts am Zentralband zu liegen kommen.

Vorzugsweise ist in der Mitte des Zentralbandes ein Längssteg vorgesehen, um ein Rutschen ausgeworfener Artikel auf die jeweils andere Seite mit Sicherheit zu verhindern.

Um die Unversehrtheit von Verpackungen sicherzustellen, werden gemäß einer bevorzugten Weiterbildung der Erfindung diverse Siegel auf ihre Unversehrtheit hin überprüft. Einige dieser Siegel sind nur in Zusammenhang einer definierten Lichtfrequenz sichtbar und so auf ihre Unversehrtheit hin zu überprüfen.

Die Artikel werden auf dem Zentralband zwar in definierten Bereichen innerhalb einer bekannten Anfangs- und Endposition am Zentralband und im definierten Abstand zueinander zu liegen kommen. Innerhalb dieser Bereiche liegen die Artikel jedoch wieder chaotisch. Nun kann es bei einigen Ausrichtungen der Artikel in Bezug auf das Kamerasystem dazu kommen, dass ein Qualitätsmerkmal von mehr als einer Kamera erfasst wird. Um bei der Bildverarbeitungseinheit unterscheiden zu können, ob nun ein Artikel mehrmals erfasst wurde oder ob es sich um mehrere Artikel handelt, wird vorzugsweise der physikalische Warenfluss aller Artikel überwacht und insbesondere der physikalische Artikelfluss fotographisch verfolgt. Um diese Anforderung erfüllen zu können, müssen zwei grundsätzliche Informationen an die Bildverarbeitungseinheit übermittelt werden:

### - Die Position im Raum der Kameras zueinander

Damit kann unter Berücksichtigung der Winkel zwischen den Kameras unterschieden werden, ob zwei unterschiedliche Kameras ein Objekt aus der unterschiedlichen Perspektive verfolgen oder ob es sich um mehrere Objekte handelt.

### - Die Geschwindigkeit des Zentralbandes

Unter Berücksichtigung der Geschwindigkeit sind dann auch die Kameras des Kamerasystems zueinander synchronisierbar, da die Bildverarbeitungseinheit das Auftauchen eines Artikels in einer Kamera vorherberechnen kann, wenn es sich um denselben Artikel handelt.

Eine weitere erfindungsgemäße Ausgestaltung kennzeichnet sich dadurch, dass eine Erkennung eines physikalischen Leerbereichs zwischen zwei Kommissionier-Aufträgen vorgenommen wird. Das Kamerasystem kann ohne zusätzliche Infrastruktur dazu verwendet werden, den am Zentralband per Definition leeren Bereich zwischen zwei Aufträgen als physikalisch leer zu erkennen. Damit wird sichergestellt, dass der Auswerfer des Zentralbandsystems nicht ohne Auftrag irrtümlich ausgeworfen hat, oder ein Artikel durch "Verspringen" in ein nicht erlaubten Bereich des Zentralbandes zu liegen gekommen ist.

Auch kann vorgesehen sein, dass bei einem Zentralbandsystem nur der Datenstrom eines Kommissionier-Auftrages aus derjenigen Kamera des Kamerasystems aufgezeichnet wird, die den Datenstrom zuerst erkannt hat. Um gegebenenfalls die Richtigkeit eines Kommissionier Auftrages im Nachhinein durchführen zu können, ist es nämlich zweckmäßig, den Datenstrom des Kamerasystems für eine spätere Verwendung aufzuzeichnen, der für das Auffinden des Qualitätsmerkmals (Barcode, Unversehrtheit, etc.) verantwortlich war. Durch die Selektion der Datenströme sinkt der Speicherbedarf auf den Datenstrom einer Kamera.

Weitere vorteilhaften Merkmale der Erfindung ergeben sich aus der nachfolgenden Beschreibung, in der bevorzugte Ausführungsbeispiele der Erfindung anhand der Zeichnungen näher erläutert sind; es zeigen:

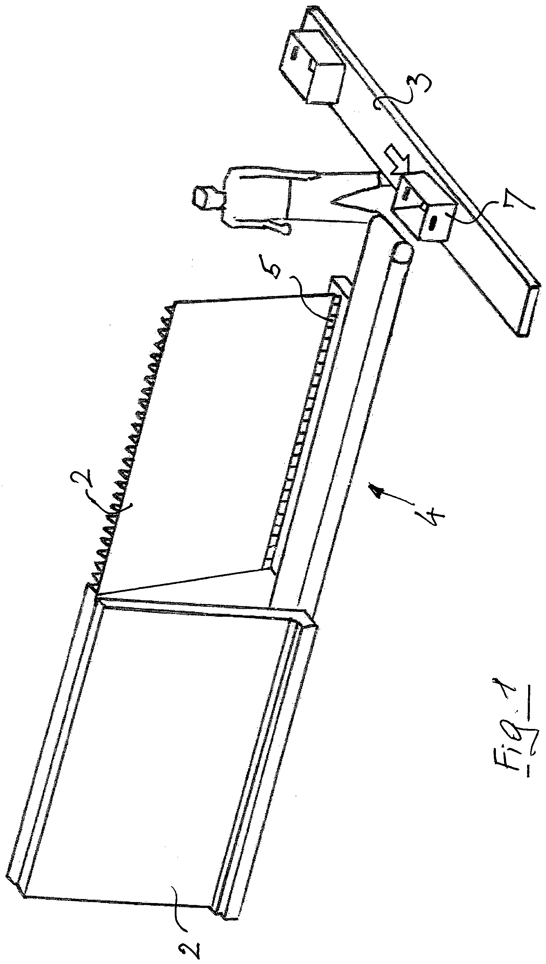

- Figur 1: ein Zentralbandsystem einer Kommissionieranlage in einer schematischen perspektivischen aufgebrochenen Ansicht,
- Figur 2: das Zentralbandsystem nach Figur 1 mit Kamera- und Beleuchtungseinheit in größerer Einzelheit,

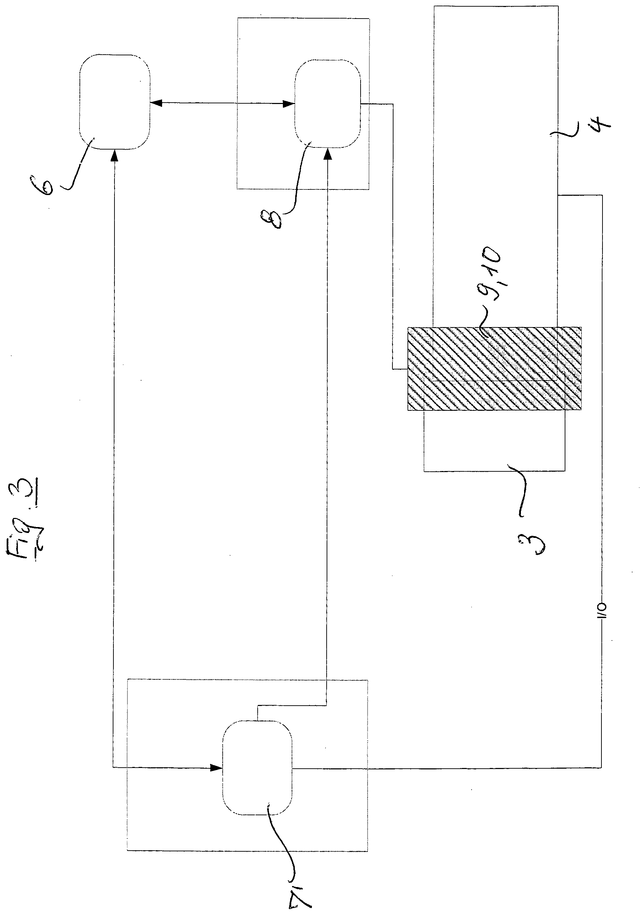

- Figur 3: die Schaltungsanordnung des Zentralbandsystems nach den Figuren 1 und 2 mit Zentralband, Kamerasystem, zentraler Steuereinheit und automatischem Kontrollsystem, und
- Figur 4: ein weitere alternative Einzelheit des Zentralbands in einer schematischen Draufsicht.

Gemäß Zeichnungen weist ein Zentralbandsystem 1 einer Kommissionieranlage A-förmig angeordnete Artikelschächte 2 mit einem bodenseitig zwischengeordneten Zentralband 4 auf, dessen Förderrichtung in Richtung einer abziehenden querverlaufenden Behälterfördertechnik 3 verläuft, wobei Auswerfer 5 der Artikelschächte von einer zentralen Steuereinheit 6 so zeitgerecht aktiviert werden, dass alle Artikel, die zu einem Kommissionier-Auftrag gehören, auf dem Zentralband in einem virtuellen Fenster gesammelt und gegebenenfalls unter Zwischenordnung eines Steigbandes in einen zugeordneten Auftragsbehälter 7 der Behälterfördertechnik abgegeben werden.

Für zu kontrollierende Artikel auf dem sich bewegendem Zentralband 4 ist ein mit der zentralen Steuereinheit 6 in Verbindung stehendes automatisches Kontrollsystem 7' mit angeschlossener Bildverarbeitungseinheit 8 vorgesehen, die von einem variablen einstellbaren Kamerasystem 9, 10 nebst variablem einstellbaren Beleuchtungssystem 11 im Bereich des Zentralbandendes mit sicheren Daten von zu kontrollierenden Artikel gespeist wird.

Das Kamerasystem 9, 10 und das Beleuchtungssystem 11 sind so eingestellt und es werden die zu kontrollierenden auf dem Zentralband 4 chaotisch angeordneten Artikel von den Auswerfern 5 so ausgeworfen, dass gegenseitige optische Schattenbildung benachbarter Artikel auf dem Zentralband 4 gerade verhindert ist.

Insbesondere ist das Zeitintervall der vom automatischen Kontrollsystem 7' berechneten Auswurfzeitpunkte der Artikel aus den Auswurfschächten 2 so gewählt, dass die Artikel im Abstand d so weit voneinander entfernt auf dem Zentralband 4 zu liegen kommen, dass es zu keiner optischen Schattenbildung kommt.

Es kann die Fördergeschwindigkeit des Zentralbandes 4 zusätzlich oder ausschließlich dynamisch verändert werden, um einen variablen Artikelabstand in Abhängigkeit von der Schattenbildung sicherzustellen.

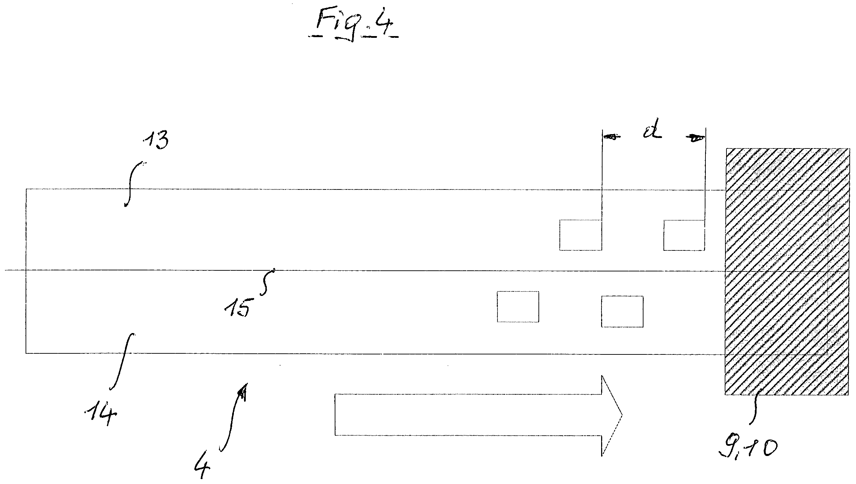

Die Beschleunigung der Auswerfer 5 wird so eingestellt, dass die ausgeworfenen Artikel der einen Artikelschachtreihe in einem dieser Schachtreihe zugewandten virtuellen Fenster der einen Zentralbandhälfte 13 und die ausgeworfenen Artikel der gegenüberliegenden Artikelschachtreihe in einem dieser gegenüberliegenden Schachtreihe zugewandten virtuellen Fenster der anderen Zentralbandhälfte 14 zu liegen kommen, wie dies aus Figur 4 hervorgeht, und zwar bevorzugt so, dass die einzelnen ausgeworfenen Artikel der einen Schachtreihe bezüglich der einzelnen ausgeworfenen Artikel der anderen Schachtreihe versetzt auf dem Zentralband zu liegen kommen. Durch die versetzte Anordnung wird gegenseitige Schattenbildung verhindert.

In der Mitte des Zentralbandes 4 nach Ausführungsform der Figur 4 befindet sich optional (je nachdem, ob es die Artikeleigenschaften erfordern) ein Längssteg 15, um ein Rutschen ausgeworfener Artikel auf die jeweils andere Längsseite des Zentralbandes mit Sicherheit zu verhindern.

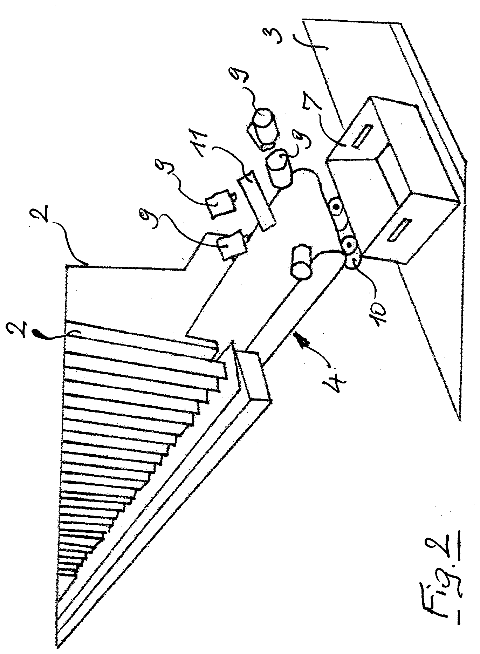

Unmittelbar nach dem Zentralband 4 sind gemäß Ausführungsform nach Figur 2 Kameras 10 des Kamerasystems 9, 10 so installiert und konfiguriert, dass die auf der Unterseite befindliche Information der Artikel gelesen werden, wenn sie einer Flugbahn folgend in den positionierten Auftragsbehälter 7 fallen, der auf der abziehenden Behälterfördertechnik 3 vorgesehen ist.

Die Artikel können statt einer Flugbahn auf einer schiefen Ebene in den Auftragsbehälter 7 rutschen.

Es findet eine Überprüfung der Verpackung der Artikel durch Überprüfung diverser Siegel auf ihre Unversehrtheit unter Verwendung einer definierten Lichtfrequenz statt.

Der physikalische Artikelfluss wird fotographisch verfolgt.

Auch wird eine Erkennung eines physikalischen Leerbereichs zwischen zwei Kommissionier-Aufträgen vorgenommen.

Es wird nur der Datenstrom eines Kommissionier-Auftrages aus derjenigen Kamera des Kamerasystems 9, 10 aufgezeichnet, die den Datenstrom erkannt hat.

Im Einzelnen ist das technische System wie folgt aufgebaut:
Eine variable Anzahl von Kameras 9, 10 werden so an das Ende des Zentralbandes 4 montiert, dass sie die zu erfassenden Daten aufnehmen können. Die Herausforderung liegt nun darin, dass die exakte Lage des Artikels am Zentralband nicht bekannt ist. Des Weiteren ist nicht bekannt, wo auf dem Artikel die zu überprüfende Information angebracht ist.

Der Einfachheit halber kann man sich hier die Erfassung eines Data-Matrix-Barcodes vorstellen. Die beschriebene Lösung ist jedoch umfassender. Es ist auch möglich, die Unversehrtheit einer Verpackung festzustellen.

Um nun die Erfassung der Data-Matrix-Barcodes zu ermöglichen, ist Folgendes sicherzustellen:
Der Abstand d der Artikel auf dem Zentralband 4 muss ein wenig vergrößert werden. Insbesondere muss gewährleistet werden, dass der Abstand d zwischen den Artikeln so gewählt wird, dass die entstehenden optischen Schatten das Erfassen der Barcodes einen nachfolgenden Artikels nicht verhindert.

Fallweise kann es vorkommen, dass der Artikel so auf dem Zentralband 4 zu liegen kommt, dass dessen Barcode vom Zentralband 4 selbst abgedeckt ist. Deshalb ist es zweckmäßig, Kameras 10 so auch am Ende des Zentralbandes anzubringen, dass der Barcode in dem kurzen Zeitfenster gelesen wird, während der Artikel einer Flugbahn folgend (oder auf einer schiefen Ebene rutschend) in den Auftragbehälter fällt. Der Auftragsbehälter kann ein Behälter auf der Fördertechnik, oder ein Befülltrichter oder eine alternative abziehende Einheit wie etwa ein weiteres Bandsystem sein.

### Rahmenbedingungen:

Die bewegten Artikel sind so kameratechnisch zu erfassen, dass klare nicht verschwommene Bilder in die Bildverarbeitungseinheit 8 gelangen.

Das Beleuchtungssystem 11 ist so variabel zu gestalten, dass je nach zu erfassender Information (Barcode, Unversehrtheit, Beschaffenheit der Verpackung, etc.) das richtige Frequenzspektrum ausgesandt wird. So sind eventuelle Schäden an einem Siegel nur unter einem bestimmten Frequenzspektrum erkennbar (etwa wie bei der Überprüfung eines Geldscheines unter UV-Licht).

Sowohl die Anzahl als auch die geometrische Anordnung der Kameras wie auch deren optische Justierung in Bezug auf Schärfentiefe und Fokus sind im Rahmen dieser Aufgabenstellung sehr komplex. Um die Inbetriebsetzung bei einem Benutzer des Zentralbandsystems mit vertretbarem Aufwand gewährleisten zu können, wird ein Selbsttestverfahren in das technische System integriert. Das Selbsttestverfahren sieht vor, dass zur Erstkonfiguration ein kalibriertes Referenzobjekt (etwa ein Würfel mit bekannten Abmessungen und definierten Aufdrucken) in das Blickfeld des technischen Systems gelegt wird. Über die Bildverarbeitungseinheit 8 wird nun:
- die Bildinformation jeder einzelnen Kamera so getestet, um sicherzustellen, dass die geometrische Anordnung, Schärfentiefe und Fokus richtig eingestellt sind. Im Falle einer Fehlkonfiguration wird der Person der Inbetriebnahme optisch und akustisch durch die Bildverarbeitungseinheit 8 aufgefordert, die angezeigten Anpassungen vorzunehmen.
- Das Beleuchtungssystem 11 wird seine unterschiedlichen Frequenzspektren nach und nach aktivieren, um sicherzustellen, dass die Bildinformation vom kalibrierten Referenzobjekt erfasst werden können.

Nach erfolgter Kalibrierung wird durch das technische System ein strukturiertes Licht auf das Zentralband projiziert. Die Kameras des Kamerasystems zeichnen diese strukturierte Information auf und legen die Ergebnisse in der Bildverarbeitungseinheit 8 ab. Im normalen Betrieb wird das strukturierte Licht nicht projiziert. Während definierter Selbsttestphasen wird das strukturierte Licht erneut projiziert und vom Kamerasystem erfasst. Der Vergleich mit den gespeicherten Referenzdaten gibt Auskunft darüber, ob ein störungsfreier Betrieb möglich ist und wird als Entscheidungsbasis für Statusmeldungen des technischen Systems herangezogen. Abhängig von der Statusmeldung wird das System gestoppt, und eine Meldung an das System 6 übermittelt.

Nachfolgend wird die Funktionsweise beschrieben.

Im Betrieb übermittelt ein Datenverarbeitungssystem in Form einer zentralen Steuereinheit 6, die den Warenfluss in einem Lager steuert sowie die Bestandstaten im Lager verwaltet - fallweise handelt es sich um ein System, fallweise werden diese Funktionen von zwei separaten Systemen wahrgenommen, einen oder mehrere Aufträge an das Kontrollsystem 7' des Zentralbandsystems 1. Dieses bereitet die Aufträge so auf, dass Artikel aus den Schächten 2 zum richtigen Zeitpunkt auf das Zentralband 4 ausgeworfen werden. Das Kontrollsystem des Zentralbandes 4 kennt die physikalische erste und letzte Position am Zentralband 4, das zu diesem Auftrag gehört, und übermittelt diese Positionen an das Kontrollsystem der Bildverarbeitungseinheit 8. Die Bildverarbeitungseinheit 8 erhält die Bilddaten vom Kamerasystem 9, 10, decodiert die geforderten qualitätssichernden Daten und Zustände (Barcode, Beschaffenheit der Verpackung, Zählen, Unversehrtheit der Verpackung, etc.), ordnet diese dem von Kontrollsystem des Zentralbandes 4 übermittelten Auftrag zu und meldet die gelesenen decodierten Informationen an selbiges zurück. Die qualitative Entscheidung, ob die übermittelten Auftragsdaten mit den gelesenen qualitätssichernden Daten übereinstimmen, obliegt dem Kontrollsystem des Zentralbandes 4. Es obliegt dem Kontrollsystem des Zentralbandes 4, die Entscheidung selbst zu treffen, oder erneut an das übergeordnete Datenverarbeitungssystem, die zentrale Steuereinheit 6, zu delegieren.

Während des Betriebs wird zwischen dem Zentralbandkontrollsystem 7' und der Bildverarbeitungseinheit 8 ständig ein Inbetrieb-Signal ("Heartbeat"-Signal) im Millisekunden-Takt ausgetauscht. So wird sichergestellt, dass die Bildverarbeitungseinheit 8 in Betrieb ist und die Datenverbindung zwischen der Bildverarbeitungseinheit 8 und Zentralbandkontrollsystem 7' funktionstüchtig ist.

### Hochlaufphase:

Während der Hochlaufphase überprüft sich das Kamerasystem 9, 10 selbst, indem es ein strukturiertes Licht auf die leere Oberfläche des Zentralbandes projiziert. Die Projektion wird optotechnisch von den Kameras erfasst und mit dem abgespeicherten Datenbestand in der Bildverarbeitungseinheit 8 verglichen. Unterscheiden sich die Bildinformationen nicht oder nur sehr gering (der Wert der Übereinstimmung ist vom Benutzer einstellbar), gilt das System als kalibriert und kann die Funktion aufnehmen.

Durch die Erfindung ist mithin eine nahezu 100prozentige Kontrolle am laufenden Zentralband möglich, insbesondere durch
- Abstandsminimierung abhängig von Artikelgeometrie und Kameraposition
- Detektion der Unterseite der Artikel
- Selbsttestmöglichkeit mit einem kalibrierten Referenzobjekt (Belichtung, Schärfentiefe, Kameraposition)
- Doppellesung eines Codes: Warenfluss wird fotographisch verfolgt
- Für Reklamationen: Nur der Datenstrom aus der Kamera, die den Code erkannt hat, wird gespeichert

## Patentansprüche

1. Zentralbandsystem (1) einer Kommissionieranlage, mit
- A-förmig angeordneten Artikelschächten (2), wobei ein Auswerfer pro Artikelschacht angebracht ist,
- einem in Richtung einer abziehenden Behälterfördertechnik (3) bewegbaren Zentralband (4),
- einer zentralen Steuereinheit (6) zum zeitgerechten Aktivieren der Auswerfer (5) der Artikelschächte, so dass alle Artikel, die zu einem Kommissionier-Auftrag gehören, auf dem Zentralband (4) in einem virtuellen Fenster gesammelt und gegebenenfalls unter Zwischenordnung eines Steigbandes in einen zugeordneten Auftragsbehälter (7) der Behälterfördertechnik abgegeben werden können,
- einem variablen einstellbaren Kamerasystem im Bereich des Zentralbandendes mit ersten Kameras (9) und zweiten Kameras (10),
- einem variablen einstellbaren Beleuchtungssystem (11) im Bereich des Zentralbandendes,
- einem mit der zentralen Steuereinheit (6) in Verbindung stehenden automatischen Kontrollsystem (7') mit angeschlossener Bildverarbeitungseinheit (8) für zu kontrollierende Artikel auf dem sich bewegenden Zentralband (4),
wobei die Bildverarbeitungseinheit (8) von dem Kamerasystem (9, 10) nebst dem Beleuchtungssystem (11) mit sicheren Daten von zu kontrollierenden Artikeln gespeist wird,
wobei die ersten Kameras (9) des Kamerasystems (9, 10) und das Beleuchtungssystems (11) so eingestellt und konfiguriert sind und die zu kontrollierenden auf dem Zentralband (4) chaotisch angeordneten Artikel von den Auswerfern (5) so ausgeworfen oder übergeben werden, dass optische Schattenbildung am zu kontrollierenden Artikel auf dem Zentralband (4) gerade verhindert ist, und die ersten Kameras (9) die auf dem Zentralband angeordneten Artikel im Bereich des Zentralbandendes erfassen können, wobei unmittelbar nach dem Zentralband (4) zweite Kameras (10) des Kamerasystems (9, 10) so installiert und konfiguriert sind, dass die auf der Unterseite befindliche Information der Artikel gelesen wird, wenn die Artikel einer Flugbahn folgend oder auf einer schiefen Ebene rutschend in den Auftragsbehälter (7) oder ein anderes abziehendes System fallen oder rutschen.

2. Verfahren zur Verwendung des Zentralbandsystems nach Anspruch 1, **dadurch gekennzeichnet, dass** das Zeitintervall der vom automatischen Kontrollsystem (7') berechneten Auswurfzeitpunkte der Artikel aus den Auswurfschächten (2) so gewählt ist, dass die Artikel im Abstand (d) so weit voneinander entfernt auf dem Zentralband (4) zu liegen kommen, dass es zu keiner optischen Schattenbildung kommt.

3. Verfahren nach Anspruch 2, **dadurch gekennzeichnet, dass** die Fördergeschwindigkeit des Zentralbandes (4) zusätzlich oder ausschließlich dynamisch verändert wird, um einen variablen Artikelabstand in Abhängigkeit von der Schattenbildung sicherzustellen.

4. Verfahren nach Anspruch 2 oder 3, **dadurch gekennzeichnet, dass** die Beschleunigung der Auswerfer (5) so eingestellt wird, dass die ausgeworfenen Artikel der einen Artikelschachtreihe in einem dieser Schachtreihe zugewandten virtuellen Fenster der einen Zentralbandhälfte (13) und die ausgeworfenen Artikel der gegenüberliegenden Artikelschachtreihe in einem dieser gegenüberliegenden Schachtreihe zugewandten virtuellen Fenster der anderen Zentralbandhälfte (14) zu liegen kommen.

5. Verfahren nach Anspruch 4, **dadurch gekennzeichnet, dass** in der Mitte des Zentralbandes (4) ein Längssteg (15) verwendet wird, um ein Rutschen ausgeworfener Artikel auf die jeweils andere Längsseite des Zentralbandes mit Sicherheit zu verhindern.

6. Verfahren nach einem der Ansprüche 2 bis 5, **dadurch gekennzeichnet, dass** eine Überprüfung der Verpackung der Artikel durch Überprüfung diverser Siegel auf ihre Unversehrtheit vorzugsweise unter Verwendung einer definierten Lichtfrequenz vorgenommen wird.

7. Verfahren nach einem der Ansprüche 2 bis 6, **dadurch gekennzeichnet, dass** der physikalische Artikelfluss fotographisch verfolgt wird.

8. Verfahren nach einem der Ansprüche 2 bis 7, **dadurch gekennzeichnet, dass** eine Erkennung eines physikalischen Leerbereichs zwischen zwei Kommissionier-Aufträgen vorgenommen wird.

9. Verfahren nach einem der Ansprüche 2 bis 8, **dadurch gekennzeichnet, dass** nur der Datenstrom eines Kommissionier-Auftrages aus derjenigen Kamera des Kamerasystems (9, 10) aufgezeichnet wird, die den Datenstrom zuerst erkannt hat.

## Claims

1. Central belt system (I) of a commissioning unit, with
- article shafts (2) arranged in an A-shaped pattern, wherein one ejector is provided per article shaft.
- a central belt (4) moving in the direction of a pull-otf container handling system (3),
- a central control unit (6) to activate ejectors (5) of the article shafts in such a timely manner that all the articles that belong to one commissioning order can be collected on the central belt (4) in a virtual window and can be released, optionally via the intermediary of an ascending belt, into an associated order container (7) of the container handling system,
- a variably adjustable camera system in the area of the end of the central belt with first cameras (9) and second cameras (10),
- a variably adjustable illumination system (11) in the area of the end of the central belt,
- an automatic control system (7'), which is in connection with the central control unit (6), with a connected image processing unit (8) for the articles to be controlled on the moving central belt (4),
wherein said image processing unit (8) is supplied with reliable data of articles to be controlled by said camera system (9, 10) and by said illumination system (11),
wherein said first cameras (9) of said camera system (9, 10) and said illumination system (11) are set and configured and the articles to be controlled, which are arranged chaotically on the central belt (4), are ejected or transferred by the ejectors (5) such that optical shadow formation on the central belt (4) is just prevented, and said first cameras (9) can detect the articles in the area of the end of the central belt, which articles are located on the central belt,
wherein said second cameras (10) of the camera system (9, 10) are installed and configured directly after the central belt (4) such that the information of the articles, which is located on the underside, is read when the articles, following a trajectory or sliding on an oblique plane, drop or slide into the order container (7) or another pull-off system.

2. Method for use of the central belt system in accordance with claim 1, **characterized in that** the time interval of the times at which the articles are ejected from the ejection shafts (2), which times are calculated by the automatic control system (7'), is selected to be such that the articles come to lie on the central belt (4) at such a distance (d) from each other that no optical shadow formation occurs.

3. Method in accordance with claim 2, **characterized in that** the speed of conveying of the central belt (4) is changed additionally or exclusively dynamically in order to ensure a variable distance between articles depending on the shadow formation.

4. Method in accordance with claim 2 or 3, **characterized in that** the acceleration of the ejectors (5) is set such that the ejected articles of one row of article shafts come to lie in a virtual window of one half (13) of the central belt, which said window faces that row of shafts, and the ejected articles of the row of article shafts located opposite come to lie in a virtual window of the other half (14) of the central belt, which latter window faces this opposite row of shafts.

5. Method in accordance with claim 4, **characterized in** mat a longitudinal web (15) is arranged in the middle of the central belt (4) in order to prevent ejected articles from sliding to the respective other longitudinal side of the central belt with certainty.

6. Method in accordance with one of the claims 2 through 5, **characterized in that** checking of the articles is performed by checking various seals for their intactness especially with the use of a defined light frequency.

7. Method in accordance with one of the claims 2 through 6, **characterized in that** the physical flow of articles is monitored photographically.

8. Method in accordance with one of the claims 2 through 7, **characterized in that** recognition of a physical empty area between two commissioning orders is performed.

9. Method in accordance with one of the claims 2 through 8, **characterized in that** only the data stream of a commissioning order from the camera of the camera system (9, 10) that was the first to recognize the data stream is recorded.

## Revendications

1. Système de courroie centrale (1) d'une installation de préparation de commandes, avec :
- des compartiments à articles (2) agencés en forme de A, un éjecteur étant prévu pour chaque compartiment à articles,
- une courroie centrale (4) mobile en direction d'un système technique de transport de conteneur (3) attracteur,
- une unité de commande centrale (6) servant à activer en temps voulu l'éjecteur (5) des compartiments à articles, de sorte que tous les articles appartenant à un ordre de préparation de commande puissent être rassemblés dans une fenêtre virtuelle sur la courroie centrale (4) et déposés, le cas échéant en intercalant une courroie montante, dans un conteneur de commande (7) associé du système technique de transport de conteneur,
- un système de caméras réglable variable dans la région de l'extrémité de courroie centrale avec des premières caméras (9) et des deuxièmes caméras (10),
- un système d'éclairage (11) réglable variable dans la région de l'extrémité de courroie centrale,
- un système de contrôle (7') automatique relié à l'unité de commande centrale (6) avec une unité de traitement d'image (8) raccordée pour les articles à contrôler sur la courroie centrale (4) mobile, l'unité de traitement d'image (8) du système de caméras (9, 10) étant alimentée, avec le système d'éclairage (11), avec des données sûres des articles à contrôler,
les premières caméras (9) du système de caméras (9, 10) et le système d'éclairage (11) étant réglés et configurés de telle sorte et les articles à contrôler disposés de façon chaotique sur la courroie centrale (4) étant éjectés ou transférés de telle sorte par les éjecteurs (5) que la formation d'ombre optique est bien empêchée au niveau de l'article à contrôler sur la courroie centrale (4) et que les premières caméras (9) puissent détecter les articles disposés dans la courroie centrale dans la région de l'extrémité de courroie centrale, des deuxièmes caméras (10) du système de caméras (9, 10) étant installées et configurées de telle sorte directement après la courroie centrale (4) que les informations se trouvant sur le côté inférieur des articles soient lues lorsque les articles tombent ou glissent, soit en suivant une trajectoire de chute, soit en glissant sur un plan oblique, dans le conteneur de commande (7) ou un autre système attracteur.

2. Procédé d'utilisation du système de courroie centrale selon la revendication 1, **caractérisé en ce que** l'intervalle de temps des moments d'éjection des articles hors des compartiments d'éjection (2), calculé par le système de contrôle (7'), est choisi de telle sorte que les articles arrivent à une certaine distance (d) les uns des autres sur la courroie centrale (4) permettant d'éviter la formation d'ombre optique.

3. Procédé selon la revendication 2, **caractérisé en ce que** la vitesse de transport de la courroie centrale (4) varie uniquement ou de façon complémentaire de façon dynamique pour garantir une distance variable entre les articles en fonction de la formation d'ombre.

4. Procédé selon la revendication 2 ou 3, **caractérisé en ce que** l'accélération des éjecteurs (5) est réglée de telle sorte que les articles éjectés d'une première série de compartiments à articles entrent dans une fenêtre virtuelle orientée vers cette série de compartiments de la première moitié de courroie centrale (13) et que les articles éjectés de la série de compartiments à articles opposée entrent dans une fenêtre virtuelle orientée vers cette série de compartiments opposée de l'autre moitié de courroie centrale (14).

5. Procédé selon la revendication 4, **caractérisé en ce qu'**un étai longitudinal (15) est utilisé au centre de la courroie centrale (4) pour empêcher de façon sûre un glissement des articles éjectés sur le respectivement autre côté longitudinal de la courroie centrale.

6. Procédé selon l'une quelconque des revendications 2 à 5, **caractérisé en ce qu'**un contrôle du conditionnement des articles est effectué en contrôlant que divers scellés n'ont pas été rompus, de préférence à l'aide d'une fréquence lumineuse définie.

7. Procédé selon l'une quelconque des revendications 2 à 6, **caractérisé en ce que** le flux d'articles physiques est suivi de façon photographique.

8. Procédé selon l'une quelconque des revendications 2 à 7, **caractérisé en ce qu'**une reconnaissance d'une zone vide physique entre deux ordres de préparation de commandes est réalisée.

9. Procédé selon l'une quelconque des revendications 2 à 8, **caractérisé en ce que** seul le flux de données d'un ordre de préparation de commande est représenté sur la caméra du système de caméras (9, 10) ayant d'abord détecté le flux de données.
